# EUROPÄISCHE PATENTSCHRIFT

(11) **EP 2 238 004 B1**
(45) Veröffentlichungstag und Bekanntmachung des Hinweises auf die Patenterteilung: **21.09.2011**
(21) Anmeldenummer: 08868918.7
(22) Anmeldetag: 10.12.2008
(51) Int. Cl.: B60T 13/26, B60T 17/04

(54) **PARKBREMSE**
PARKING BRAKE
FREIN DE STATIONNEMENT

(30) Priorität: 21.12.2007 DE 102007061908
(43) Veröffentlichungstag der Anmeldung: 13.10.2010
(73) Patentinhaber: KNORR-BREMSE Systeme für Nutzfahrzeuge GmbH, 80809 München (DE)
(72) Erfinder: BALOGH, Levente, H-2310 Szigetszentmiklós (HU)
(74) Vertreter: Schönmann, Kurt
(86) Internationale Anmeldenummer: PCT/EP2008/010463
(87) Internationale Veröffentlichungsnummer: WO 2009/083108

(56) Entgegenhaltungen:
- WO-A-2007/010490
- US-A- 3 761 139
- US-A- 4 124 254

## Beschreibung

Die Erfindung bezieht sich auf eine Parkbremse gemäß dem Oberbegriff des Patentanspruches 1. Bei Nutzfahrzeugen einschließlich Anhängern sowie Schienenfahrzeugen sind Parkbremsen (auch Feststellbremse genannt) mit Federspeicher-Bremszylindern ausgestattet, die in Lösestellung einen Federkompressionsraum mit Druckluft beaufschlagen und dadurch die Feder gespannt halten, während zum Bremsen der Federkompressionsraum entlüftet, d.h. mit Atmosphärendruck verbunden wird, so daß der Bremszylinder unter Wirkung der Feder eine Bremskraft erzeugt (vgl. Bosch, Kraftfahrtechnisches Taschenbuch, 22. Auflage, Düsseldorf, 1995, S. 648).

Es sind sowohl rein pneumatisch betriebene Parkbremsen bekannt, die mit einem vom Fahrer zu betätigenden bistabilen Parkbremsventil betrieben werden (US-A-3 761 139, WO 2007/010490-A2, US-A-4 124 254) als auch elektro-pneumatische Anlagen mit einem bistabilen elektro-mechanischem Ventil, beispielsweise einem pneumatischen Relaisventil, das durch ein elektro-mechanisches, bistabiles Umschaltventil gesteuert wird. Beide Ventilstellungen für "Parkbremse" und "Lösen" müssen dabei "stabil" sein, d.h. ohne Einwirkung einer Person in der jeweils gewählten Stellung bleiben.

Bei der Parkbremsanlage gemäß US-A-3 761 139 wird ein Federspeicher-Bremszylinder über ein pneumatisches, von Hand zu betätigendes Parkbremsventil wahlweise mit Druckluft aus einem Vorratsbehälter oder mit Atmosphärendruck verbunden. Eine Leitung zwischen dem Parkbremsventil und dem Federspeicher-Bremszylinder weist in Parallelschaltung ein Rückschlagventil und eine Strömungsverengung auf. Das Rückschlagventil ist so geschaltet, daß eine Druckluftzufuhr zum Federspeicher-Bremszylinder durch das Rückschlagventil hindurch erfolgt, während ein Entlüften des Federspeicher-Bremszylinders nur über die Strömungsverengung läuft und daher langsam vonstatten geht.

Bistabile Ventile sind jedoch in der Praxis störanfällig, was dazu führt, redundante Systeme zu realisieren, was zusätzlichen Aufwand bedingt.

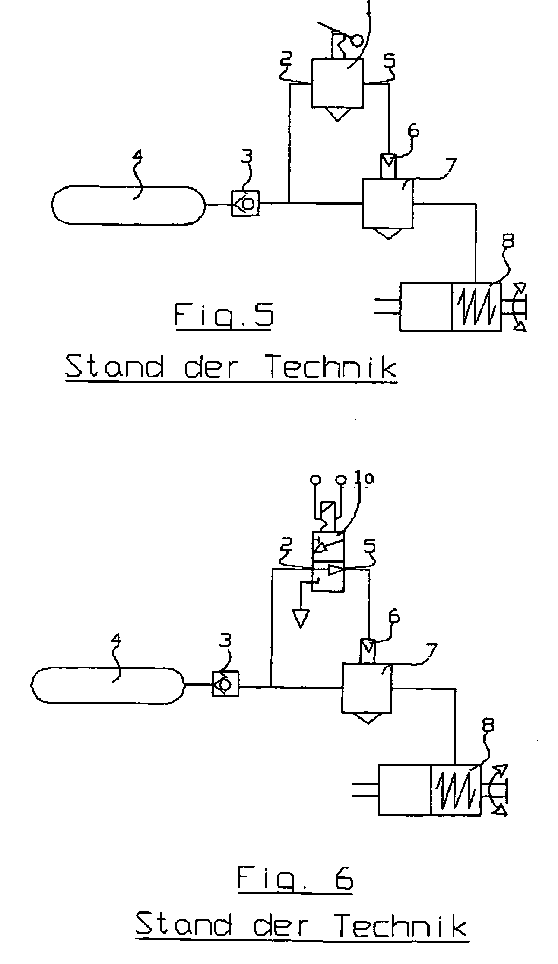

Eine Parkbremse nach dem Stand der Technik, von dem die Erfindung ausgeht, ist in den Fig. 5 und 6 beschrieben. In Fig. 5 ist ein rein pneumatisches bistabiles Parkbremsventil 1 gezeigt, dessen Eingang 2 über ein Rückschlagventil 3 mit einem Druckbehälter 4 verbunden ist und dessen Ausgang 5 mit einem Steuereingang 6 eines Relaisventils 7 verbunden ist, dessen Ausgang wiederum mit einem Federspeicher-Bremszylinder 8 verbunden ist. Das Parkbremsventil 1 hat zwei stabile Stellungen, nämlich eine Lösestellung, in welcher sein Eingang 2 mit dem Ausgang 5 verbunden ist, so daß das Relaisventil 7 durchschaltet und Druckluft von dem Behälter 4 zum Federspeicher-Bremszylinder 8 geleitet wird.

In der zweiten Stellung des Parkbremsventils 1, d.h. der Bremsstellung, sperrt das Parkbremsventil 1 den Eingang 2 ab und entlüftet den Ausgang 5, so daß auch das Relaisventil 7 sperrt und seinen Ausgang mit Atmosphäre verbindet, so daß der Federkompressionsraum des Federspeicher-Bremszylinders entlüftet wird und der Bremszylinder durch die Feder betätigt wird.

Beim Stand der Technik gem. Fig. 6 ist das pneumatische Parkbremsventil 1 der Fig. 5 durch ein bistabiles Umschaltventil 1a ersetzt, welches ebenfalls zwei stabile Schaltstellungen hat, die in analoger Weise das Relaisventil 7 ansteuern.

Aufgabe der vorliegenden Erfindung ist es, die Parkbremse der eingangs genannten Art dahingehend zu verbessern, daß sie mit geringerem Aufwand sicher arbeitet.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der vorliegenden Erfindung liegt darin, die Parkbremse mit einem oder mehreren monostabilen Ventilen anzusteuern. Der Parkbremskreis ist dabei "selbst verriegelnd". Zum Einstellen des gewünschten Zustandes (Bremsen/Lösen) muß ein entsprechendes Brems- oder Löse-Umschaltventil kurzzeitig aktiv betätigt werden, wodurch der Federspeicher-Bremszylinder in die gewünschte Position geht, in welcher er stabil bleibt. Das entsprechende Umschaltventil kann nach dieser kurzen Betätigung wieder in seine monostabile Ausgangsstellung gehen, ohne daß dies einen Einfluß auf die Stellung des Federspeicher-Bremszylinders hat. Dieser bleibt solange in der jeweiligen Position, bis ein gegenteiliger Befehl durch aktives Betätigen des Ventils oder der Ventile gegeben wird. Die selbstverriegelnde Stellung des Parkbremskreises wird durch eine Verbindung des pneumatischen Steuereinganges eines Relaisventils mit dem pneumatischen Ausgang desselben Relaisventils erreicht, die man als Rückkopplung oder Kurzschluß bezeichnen kann. In diesen Rückkopplungszweig ist ein monostabiles Umschaltventil eingeschaltet, das in der stabilen Schaltstellung Eingang und Ausgang des Relaisventils miteinander verbindet.

Die Erfindung schafft also eine Parkbremse mit einem Federspeicher-Bremszylinder, der über ein Relaisventil wahlweise mit einer Druckmittelquelle oder Atmosphärendruck verbindbar ist, wobei ein pneumatischer Steuereingang des Relaisventils über ein Umschaltventil wahlweise mit der Druckmittelquelle oder Atmosphärendruck verbindbar ist, wobei das Umschaltventil ein monostabiles Umschaltventil ist und wobei der Druckmittelausgang des Relaisventils über ein weiteres monostabiles Umschaltventil mit dem pneumatischen Steuereingang des Relaisventils verbunden ist.

Durch das genannte weitere Umschaltventil wird der erwähnte Rückkopplungskreis geschlossen oder geöffnet. Durch die Verwendung von monostabilen Umschaltventilen, die sich als zuverlässig erprobte und kostengünstige Bauteile bewährt haben, läßt sich der Aufwand der Parkbremse verringern und die Zuverlässigkeit erhöhen.

Vorzugsweise sind beide monostabilen Umschaltventile als elektrisch betätigte Umschaltventile ausgebildet.

Nach einer Weiterbildung der Erfindung ist die Bremsanlage auch für die Bremsung von Anhängern geeignet. Unter Verwendung desselben Prinzips wird lediglich ein drittes monostabiles Umschaltventil benötigt, welche das übliche, ohnehin vorhandene Anhängerbremsventil ansteuert.

Im folgenden wird die Erfindung anhand von Ausführungsbeispielen im Zusammenhang mit der Zeichnung ausführlicher erläutert. Es zeigt:
- Fig. 1: Ein Prinzipschaltbild der elektro-pneumatischen Parkbremse nach einem ersten Ausführungsbeispiel der Erfindung;
- Fig. 2: ein konkretes Ausführungsbeispiel der Erfindung, bei der die Parkbremse in Lösestellung ist;
- Fig. 3: eine Abbildung ähnlich Fig. 2, bei der die Parkbremse in Bremsstellung ist;
- Fig. 4: ein Prinzipschaltbild eines Ausführungsbeispieles für eine Anhängerbremse;
- Fig. 5: eine rein pneumatische Parkbremse nach dem Stand der Technik; und
- Fig. 6: eine elektrisch-pneumatische Parkbremse nach dem Stand der Technik.

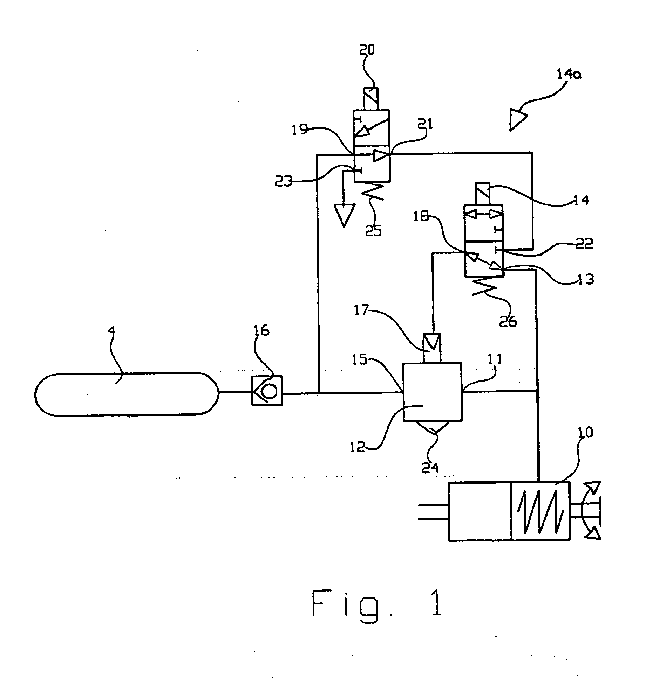

In Fig. 1 ist ein Federspeicher-Bremszylinder 10 pneumatisch mit einem Ausgang 11 eines Relaisventils 12 und gleichzeitig mit einem Anschluß 13 eines elektrisch-steuerbaren monostabilen Umschaltventils 14 verbunden. Ein Eingang 15 des Relaisventils 12 ist über ein Rückschlagventil 16 mit einer Druckmittelquelle 4, wie z.B. einem Vorratsbehälter, verbunden. Ein pneumatischer Steuereingang 17 des Relaisventils 12 ist mit einem zweiten Anschluß 18 des Umschaltventils 14 verbunden. Weiter ist der Eingang 15 des Relaisventils 12 mit einem ersten Anschluß 19 eines zweiten Umschaltventils 20 verbunden. Ein Anschluß 21 des zweiten Umschaltventils 20 ist mit einem dritten Anschluß 22 des ersten Umschaltventils 14 verbunden. Das zweite Umschaltventil 20 hat noch einen Entlüftungsanschluß 23 zur Atmosphäre. Ebenfalls hat das Relaisventil 12 einen Entlüftungsanschluß 24 zur Atmosphäre. Die beiden Umschaltventile 14 und 20 sind monostabile Magnetventile, die jeweils durch eine Feder 25 bzw. 26 in die dargestellte stabile Ruhestellung gedrückt werden. Bei elektrischer Aktivierung werden diese beiden Umschaltventile 20 und 14 umgeschaltet und sie kehren nach Beendigung der elektrischen Aktivierung in die dargestellte stabile Stellung zurück.

Der eingangs genannte Rückkopplungszweig des Relaisventils 12 wird durch das erste Umschaltventil 14 zwischen dessen Anschlüssen 13 und 18 gebildet, die in der dargestellten stabilen Position pneumatisch miteinander verbunden sind.

Das zweite Umschaltventil 20 verbindet in der stabilen Stellung die Anschlüsse 19 und 21 miteinander, so daß Druckluft aus der Druckluftquelle 4 über das zweite Umschaltventil 20 ständig am Anschluß 22 des zweiten Umschaltventils anliegt. Dieser Anschluß 22 ist in der dargestellten stabilen Stellung abgesperrt. Wird das erste Umschaltventil 14 aktiviert, so werden die Anschlüsse 18 und 22 miteinander verbunden, so daß Druckluft von der Druckluftquelle 4 über das in der stabilen Stellung befindliche zweite Umschaltventil 20 zum Steueranschluß 17 des Relaisventils 12 gelangt. Dieses läßt darauf Druckluft vom Eingang 15 zum Ausgang 11 gelangen und von dort gleichzeitig zum Federspeicher-Bremszylinder 10 und zum Anschluß 13 des ersten Umschaltventils 14. Der Federspeicher-Bremszylinder 10 wird somit mit Druckluft beaufschlagt und in bekannter Weise in die Lösestellung der Parkbremse gebracht. Bei anschließender Deaktivierung des ersten Umschaltventils 14 kehrt dieses in die dargestellte stabile Ruhelage zurück, in welcher die Anschlüsse 13 und 18 miteinander verbunden sind. Der zuvor in den Federspeicher-Bremszylinder 10 eingespeiste Druck gelangt dann über den Rückkopplungszweig zum Steueranschluß 17 des Relaisventils 12, das somit geöffnet bleibt, wodurch der Federspeicher-Bremszylinder weiterhin mit Druckluft aus der Druckluftquelle 4 verbunden bleibt. Die Stellung des Federspeicher-Bremszylinders 10 ist somit "verriegelt" und unabhängig von der Stellung des ersten Umschaltventils 14. Dieses erste Umschaltventil 14 hat im übertragenen Sinne die Funktion eines Lösemagnetventils.

Zum Einbremsen muß der Federspeicher-Bremszylinder entlüftet werden. Hierzu werden beide Umschaltventile 14 und 20 gleichzeitig betätigt. Durch Aktivierung des ersten Umschaltventils 14 werden dessen Anschlüsse 18 und 22 miteinander verbunden, so daß im Ergebnis der pneumatische Steueranschluß des Relaisventils 12 mit dem Anschluß 21 des zweiten Umschaltventils 20 verbunden wird. Ist dieses aktiviert, so ist sein Anschluß 21 mit dem Entlüftungsanschluß 23 verbunden, so daß im Ergebnis der Druck am pneumatischen Steueranschluß 17 des Relaisventils 12 abgebaut und zur Atmosphäre hin entlüftet wird. Dadurch schließt das Relaisventil 12 und öffnet eine Verbindung zwischen dem Ausgang 11 und dem Entlüftungsanschluß 24, womit auch der Federspeicher-Bremszylinder 10 entlüftet wird und die Parkbremse durch die Feder des Federspeicher-Bremszylinders 10 aktiviert wird. Beim anschließenden Deaktivieren der beiden Umschaltventile 14 und 20 gelangen diese wieder in ihre monostabile Stellung, in welcher der Anschluß 13 des ersten Umschaltventils 14 mit dem zuvor entlüfteten Anschluß 18 verbunden ist. Damit ist der drucklose Zustand in dem Rückkopplungskreis stabil und es kann keine Druckluft zum Relaisventil 12 und damit auch nicht zum Federspeicher-Bremszylinder 10 gelangen. Damit ist auch die Bremsstellung des Federspeicher-Bremszylinders 10 verriegelt und kann erst durch Aktivierung des ersten Umschaltventils 14 in oben beschriebener Weise aufgehoben werden.

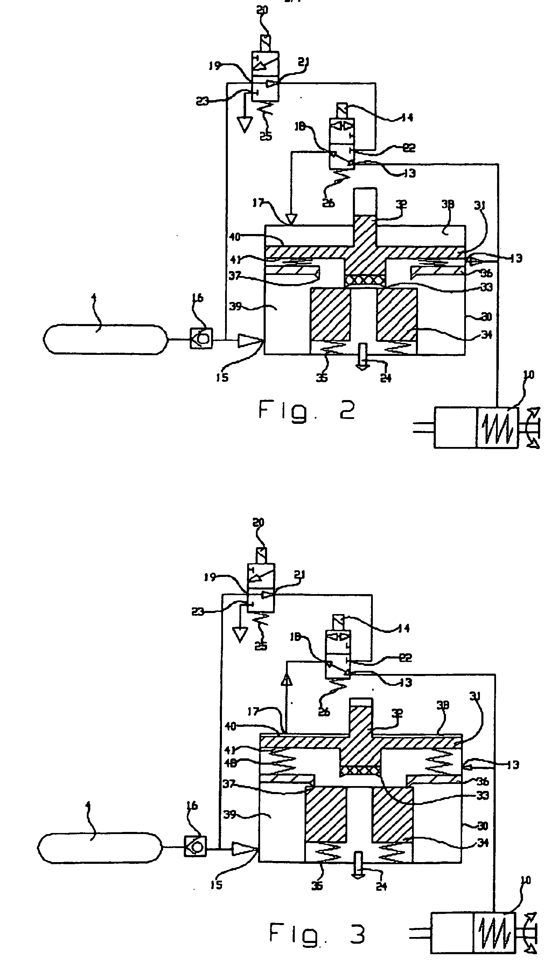

Im Ausführungsbeispiel der Fig. 2 ist das Relaisventil 12 der Fig. 1 detaillierter dargestellt. In einem Gehäuse 30 ist ein Kolben 31 mit einer Kolbenstange 32 verschieblich geführt. An der der Kolbenstange 32 gegenüberliegenden Seite hat der Kolben 31 einen Ventilsitz 33, der gegen einen zweiten Kolben 34 zur Anlage kommen kann. Der zweite Kolben 34 hat eine zentrale Bohrung, die mit einer Entlüftungsöffnung 24 in Verbindung steht. Der zweite Kolben 34 ist durch eine Feder 35 in Richtung zum ersten Kolben 31 hin belastet.

Das Gehäuse 30 ist durch eine Trennwand 36, die einen Ventilsitz 37 aufweist, in eine erste Kammer 38 und eine zweite Kammer 39 unterteilt. Der erste Kolben 31 ist in der ersten Kammer 38 verschieblich und der zweite Kolben 34 ist in der zweiten Kammer 39 verschieblich. Der zweite Kolben 34 kann durch die Feder 35 gegen den Ventilsitz 37 gedrückt werden, womit die beiden Kammern 38 und 39 voneinander getrennt sind.

Eine in die erste Kammer 38 weisende Kolbenfläche 40 des ersten Kolbens 31 ist dabei größer als die in die entgegengesetzte Richtung weisende Kolbenfläche 41.

Weiter sind die im Zusammenhang mit Fig. 1 schon näher beschriebenen Umschaltventile 14 und 20 sowie die Druckmittelquelle 4 und das Rückschlagventil 16 vorhanden. Der Anschluß 18 des Umschaltventils 14 ist an die erste Kammer 38 angeschlossen, während der Anschluß 13 des Umschaltventils 14 an das Gehäuse 30 in einem Bereich zwischen der zweiten Kolbenfläche 41 und der Trennwand 36 angeschlossen ist. Die Druckmittelquelle 4 und damit auch der Anschluß 19 des Umschaltventils 20 sind an die zweite Kammer 39 angeschlossen.

In Fig. 2 ist die Lösestellung dargestellt. Durch ein kurzzeitiges Betätigen des ersten Umschaltventils 14 wird die erste Kammer 38 mit Druckluft beaufschlagt. Die zweite Kammer 39 ist über den Anschluß 15 ebenfalls ständig mit Druckluft aus der Druckluftquelle 4 beaufschlagt. Aufgrund der Flächendifferenz der Kolbenflächen 40 und 41 wird der erste Kolben 31 in Richtung zum zweiten Kolben 34 gedrückt. Dadurch wird der Ventilsitz 33 geschlossen und die Entlüftungsöffnung 24 abgesperrt. Der Ventilsitz 37 ist geöffnet, so daß beide Kolbenflächen 40 und 41 mit demselben Druck beaufschlagt sind. Aufgrund der Flächendifferenz der Kolbenflächen 40 und 41 werden damit beide Kolben 31 und 34 gegen die Kraft der Feder bis in eine Grenzstellung gedrückt, bei der die Parkbremse gelöst ist. Die oben beschriebene Rückkopplung findet über das in der stabilen Ruhestellung befindliche Umschaltventil 14 dadurch statt, daß die beiden Kammern 38 und 39 miteinander verbunden sind und somit auch ständig mit dem aus der Druckluftquelle 4 stammenden Druck beaufschlagt sind, der über den geöffneten Ventilsitz 37, den Anschluß 13 und das durchgeschaltete Umschaltventil 14 von dessen Anschluß 18 zum Anschluß 17 des Relaisventils 12 und damit in die erste Kammer 38 gelangt. Damit ist die dargestellte Lösestellung "verriegelt".

Zum Betätigen der Parkbremse werden die beiden Umschaltventile 14 und 20 kurzzeitig aktiviert. Der Druck aus der ersten Kammer 38 wird dadurch zur Entlüftungsöffnung 23 des zweiten Umschaltventils 20 abgeleitet. Durch den Druck in der zweiten Kammer und unter Wirkung der Feder 35 bewegen sich beide Kolben 30 und 34 von der Feder 35 fort, bis der zweite Kolben 34 den Ventilsitz 37 schließt. Durch eine weitere zwischen der Trennwand 36 und der Kolbenfläche 41 angeordnete Feder 48 hebt der erste Kolben 31 vom zweiten Kolben 34 ab, so daß sich der Ventilsitz 33 öffnet und der zwischen der Trennwand 36 und der Kolbenfläche 41 liegende Raum über die Öffnung 24 zur Atmosphäre hin entlüftet wird. Durch die Verbindung über das Umschaltventil 14 sind damit beide Kolbenflächen 40 und 41 mit Atmosphärendruck beaufschlagt und die Parkposition der Bremse ist "verriegelt" und kann nur durch Aktivierung des ersten Umschaltventils 14 bei deaktiviertem zweiten Umschaltventil 20 aufgehoben werden.

In der Lösestellung kann zusammengefaßt Druckluft über den geöffneten Ventilsitz 37 und das in Ruhestellung befindliche erste Umschaltventil 14 in die erste Kammer 38 gelangen und zum Federspeicher-Bremszylinder 10. In der Bremsstellung dagegen sind durch den geöffneten Ventilsitz 33 und den geschlossenen Ventilsitz 37 beide Kolbenflächen des ersten Kolbens 31 und der Federspeicher-Bremszylinder 10 mit Atmosphärendruck verbunden.

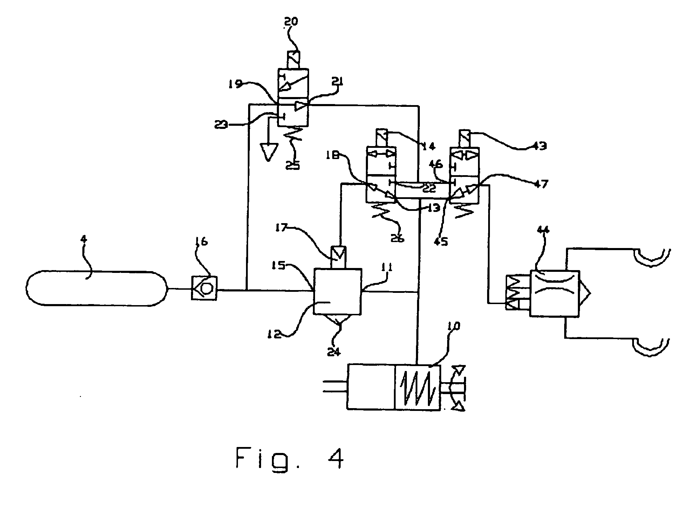

Fig. 4 zeigt eine Parkbremsanlage ähnlich Fig. 1, jedoch modifiziert für eine Parkbremse für einen Fahrzeugverbund mit Zugfahrzeug und Anhänger. Für die Parkbremse des Anhängers ist lediglich noch ein drittes Umschaltventil 43 vorzusehen, welches ein übliches Anhängerbremsventil 44 steuert. Auch das Umschaltventil 43 ist ein monostabiles Magnetventil, das dem ersten Umschaltventil 14 parallel geschaltet ist. Das Anhängerbremsventil 44 wird ebenfalls über das Relaisventil 12 angesteuert, was über die beiden Umschaltventile 14 und 43 erfolgt. Ein Eingang 45 des Umschaltventils 43 ist an den beschriebenen Rückkopplungskreis angeschlossen, d.h. an den Ausgang 11 des Relaisventils 12 und gleichzeitig den Anschluß 13 des ersten Umschaltventils 14 sowie den Federspeicher-Bremszylinder 10 des Zugfahrzeuges. Ein anderer Eingang 46 des Umschaltventils 43 ist mit dem Ausgang 21 des zweiten Umschaltventils 20 verbunden und gleichzeitig mit dem Anschluß 22 des ersten Umschaltventils 14. Ein Ausgang 46 des Umschaltventils 43 ist mit einem pneumatischen Steuereingang des Anhängerbremsventils 44 verbunden.

Mit dieser Anordnung kann die Anhängerbetriebsbremse gelöst werden bei gleichzeitig aktivierter Parkbremse des Zugfahrzeuges. Umgekehrt kann über die Umschaltventile 20 und 43 auch bei gelöster Parkbremse des Zugfahrzeuges die Anhängerbremse aktiviert werden, im Sinne einer sogenannten Streckbremsung.

Auch ist für Zugfahrzeug und/oder Anhänger eine Notbremsfunktion bei Ausfall der Betriebsbremse verfügbar.

## Patentansprüche

1. Parkbremse mit einem Federspeicher-Bremszylinder (10), der über ein Relaisventil (12) wahlweise mit einer Druckmittelquelle (4) oder Atmosphärendruck verbindbar ist, **gekennzeichnet durch** einen steuerbaren Rückkopplungskreis (14a), der einen pneumatischen Steuereingang (17) des Relaisventils (12) mit einem pneumatischen Ausgang (11) des Relaisventils (12) und dem Federspeicher-Bremszylinder (10) verbindet,

2. Parkbremse nach Anspruch 1, **dadurch gekennzeichnet, dass** der pneumatische Steuereingang (17) des Relaisventils (12) über ein Umschaltventil (20) wahlweise mit der Druckmittelquelle (4) oder Atmosphärendruck verbindbar ist,
daß das Umschaltventil (20) ein monostabiles Umschaltventil ist und
daß der Rückkopplungskreis (14a) ein weiteres monostabiles Umschaltventil (14) enthält, das in seiner stabilen Stellung den Druckmittelausgang (11) des Relaisventils (12) mit dem pneumatischen Steuereingang (17) des Relaisventils (12) verbindet.

3. Parkbremsanlage nach Anspruch 2, **dadurch gekennzeichnet, daß** beide monostabilen Umschaltventile (20, 14) Magnetventile sind.

4. Parkbremsanlage nach Anspruch 1, 2 oder 3, **dadurch gekennzeichnet, daß** das Relaisventil (12) einen verschieblichen Kolben (31) aufweist, der eine erste Kammer (38) gegenüber einer zweiten Kammer (39) abdichtet, wobei die erste Kammer (38) mit dem pneumatischen Steuereingang (17) und die zweite Kammer (39) mit dem Druckmittelausgang (11) des Relaisventils verbunden ist und das weitere monostabile Umschaltventil (14) in seiner monostabilen Stellung die beiden Kammern (38, 39) miteinander verbindet, während es in seiner aktivierten, instabilen Stellung die zweite Kammer (39) absperrt und die erste Kammer (38) mit dem ersten Umschaltventil (20) verbindet.

5. Parkbremsanlage nach Anspruch 4 **dadurch gekennzeichnet, daß** eine zur ersten Kammer (38) weisende Kolbenfläche (40) des Kolbens (31) größer ist als eine zur zweiten Kammer (39) weisende Kolbenfläche (41) des Kolbens (31).

6. Parkbremsanlage nach Anspruch 4 oder 5, **dadurch gekennzeichnet, daß** das monostabile Umschaltventil (20) in seiner monostabilen Lage die Druckmittelquelle (4) mit einem Eingang (22) des weiteren monostabilen Umschaltventils (14) verbindet und in seiner aktivierten instabilen Stellung den genannten Eingang (22) mit Atmosphäre verbindet.

7. Parkbremsanlage nach einem der Ansprüche 1 bis 6, **dadurch gekennzeichnet, daß** dem weiteren monostabilen Umschaltventil (14) ein drittes monostabiles Umschaltventil (43) parallel geschaltet ist, welches ein pneumatisches Anhängerbremsventil (44) ansteuert.

## Claims

1. Parking brake with a spring-loaded brake cylinder (10), which can optionally be connected by means of a relay valve (12) to a pressure medium source (4) or to atmospheric pressure, **characterised by** a controllable feedback circuit (14a) which connects a pneumatic control inlet (17) of the relay valve (12) to a pneumatic outlet (11) of the relay valve (12) and to the spring-loaded brake cylinder (10).

2. Parking brake according to Claim 1, **characterised in that** the pneumatic control inlet (17) of the relay valve (12) can optionally be connected to the pressure medium source (4) or to atmospheric pressure by a change-over valve (20),
the said change-over valve (20) is a monostable change-over valve, and
the feedback circuit (14a) comprises a further monostable change-over valve (14) which, in its stable position, connects the pressure medium outlet (11) of the relay valve (12) to the pneumatic control inlet (17) of the relay valve (12).

3. Parking brake according to Claim 2, **characterised in that** the two monostable change-over valves (20, 14) are magnetic valves.

4. Parking brake according to Claims 1, 2 or 3, **characterised in that** the relay valve (12) comprises a movable piston (31) which seals a first chamber (38) relative to a second chamber (39), such that the first chamber (38) is connected to the pneumatic inlet (17) and the second chamber (39) to the pressure medium outlet (11) of the relay valve, and in its monostable position the further monostable change-over valve (14) connects the two chambers (38, 39) to one another whereas in its activated, unstable position it blocks the second chamber (39) and connects the first chamber (38) to the first change-over valve (20).

5. Parking brake according to Claim 4, **characterised in that** a piston face (40) of the piston (31) that faces toward the first chamber (38) is larger than a piston face (41) of the piston (31) that faces toward the second chamber (39).

6. Parking brake according to Claims 4 or 5, **characterised in that** in its monostable position the monostable change-over valve (20) connects the pressure medium source (4) to an inlet (22) of the further monostable change-over valve (14) and in its activated unstable position it connects the said inlet (22) to the atmosphere.

7. Parking brake according to Claims 1 to 6, **characterised in that** a third monostable change-over valve (43) is connected parallel to the said further monostable change-over valve (14), which controls a pneumatic trailer brake valve (44).

## Revendications

1. Frein de stationnement, comprenant un cylindre (10) de frein à ressort accumulateur, qui peut être relié par une vanne (12) de relais au choix à une source (4) de fluide sous pression ou à la pression atmosphérique, **caractérisé par** un circuit (14a) de réaction, qui peut être commandé et qui relie une entrée (17) pneumatique de commande de la vanne (12) de relais à une sortie (11) pneumatique de la vanne (12) de relais et au cylindre (10) de frein à ressort accumulateur.

2. Frein de stationnement suivant la revendication 1, **caractérisé en ce que** l'entrée (17) pneumatique de commande de la vanne (12) de relais peut être reliée par une vanne (20) de commutation au choix à la source (4) de fluide sous pression ou à la pression atmosphérique,
**en ce que** la vanne (20) de commutation est une vanne de commutation monostable et
**en ce que** le circuit (14a) de réaction comporte une autre vanne (14a) de commutation monostable, qui, dans sa position stable, relie la sortie, (11a) de fluide sous pression de la vanne (12) de relais à l'entrée (17) pneumatique de commande de la vanne (12) de relais.

3. Système de frein de stationnement suivant la revendication 2, **caractérisé en ce que** les deux vannes (20, 14) de commutation monostables sont des électrovannes.

4. Système de frein de stationnement suivant la revendication 1, 2 ou 3, **caractérisé en ce que** la vanne (12) de relais a un piston (31) coulissant, qui rend étanche une première chambre (38) par rapport à une deuxième chambre (3), la première chambre (38) étant reliée à l'entrée (17) pneumatique de commande et la deuxième chambre (39) à la sortie (11) du fluide sous pression de la vanne de relais et l'autre vanne (14) de commutation monostable relie, dans sa position monostable, les deux chambres (38, 39) entre elles, tandis que, dans sa position instable activée, elle ferme la deuxième chambre (39) et relie la première chambre (38) à la première vanne (20) de commutation.

5. Système de frein de stationnement suivant la revendication 4, **caractérisé en ce qu'**une surface (40) du piston (31) tournée vers la première chambre (38) est plus grande qu'une surface (41) du piston (31) tournée vers la deuxième chambre (39).

6. Système de frein de stationnement suivant la revendication 4 ou 5, **caractérisé en ce que** la vanne (20) de commutation monostable relie, dans sa position monostable, la source (4) de fluide sous pression à une entrée (22) de l'autre vanne (14) de commutation monostable et, dans sa position (1) stable activée, ladite entrée (22) à l'atmosphère.

7. Système de frein de stationnement suivant l'une des revendications 1 à 6, **caractérisé en ce qu'**en parallèle à l'autre vanne (14) de commutation monostable est montée une troisième vanne (43) de commutation monostable, qui commande une vanne (44) pneumatique de frein de remorque.
